## Europäisches Patentamt
## European Patent Office
## Office européen des brevets

(19)

(11) Numéro de publication: **0 051 015**
**B1**

(12) **FASCICULE DE BREVET EUROPEEN**

(45) Date de publication du fascicule du brevet: **27.12.84**

(51) Int. Cl.³: **B 62 D 5/00**

(21) Numéro de dépôt: **81401618.4**

(22) Date de dépôt: **15.10.81**

(54) Dispositif d'assistance rotative, notamment pour direction de véhicule.

(30) Priorité: **20.10.80 FR 8022407**

(43) Date de publication de la demande:
**05.05.82 Bulletin 82/18**

(45) Mention de la délivrance du brevet:
**27.12.84 Bulletin 84/52**

(84) Etats contractants désignés:
**DE GB IT SE**

(56) Documents cités:
**FR-A-2 417 676**
**US-A-2 833 154**

(73) Titulaire: **SOCIETE ANONYME AUTOMOBILES CITROEN**
**117 à 167, Quai André Citroen**
**F-75747 Paris Cedex 15 (FR)**

(73) Titulaire: **AUTOMOBILES PEUGEOT**
**75, avenue de la Grande Armée**
**F-75116 Paris (FR)**

(72) Inventeur: **Barthelemy, André**
**52, route de Limours**
**F-78470 Saint-Remy-Les-Chevreuse (FR)**

(74) Mandataire: **Michardière, Bernard et al**
**Cabinet Plasseraud 84, rue d'Amsterdam**
**F-75009 Paris (FR)**

Courier Press, Leamington Spa, England.

# Description

L'invention est relative à un dispositif d'assistance rotative propre à être accouplé à un organe récepteur susceptible de tourner dans les deux sens, notamment en réponse à la rotation d'un arbre de manoeuvre, dispositif du genre de ceux qui comprennent un moteur susceptible de tourner à une vitesse relativement élevée par rapport à celle de l'arbre de manoeuvre et de l'organe récepteur, des moyens de démultiplication de la vitesse du moteur, comprenant un pignon entraîné par le moteur, et des moyens d'accouplement à friction propres à assurer l'entraînement de l'arbre récepteur par les moyens de démultiplication et le moteur (brevet US—A 2 833 154)

L'invention concerne particulièrement, mais non exclusivement, de tels dispositifs d'assistance rotative pour direction de véhicules automobiles.

L'invention a pour but, surtout, de rendre les dispositifs d'assistance rotative du genre en question tels qu'ils répondent mieux que jusqu'à présent aux diverses exigences de la pratique et notamment tels que leur fonctionnement soit plus doux et plus silencieux et que leur durée de fonctionnement soit augmentée.

Ce résultat est atteint grâce à un dispositif d'assistance rotative du genre ci dessus défini, caractérisé par le fait qu'il comprend des moyens d'amortissement angulaire du couple, constitués par un accouplement élastique de grande flexibilité, disposés à l'intérieur du pignon, entre le moteur et l'accouplement à friction.

Avantageusement, cet accouplement élastique de grande flexibilité est constitué par au moins un ressort spiral.

Le résultat recherché est ainsi obtenu sans accroissement appréciable le l'encombrement du dispositif.

Le moteur, notamment électrique, peut tourner dans un seul sens, auquel cas les moyens de démultiplication comprennent deux trains d'engrenages réducteurs, associés à deux accouplements à friction, correspondant aux deux sens de rotation. Un de ces trains d'engrenages comprend un renvoi de plus que l'autre pour assurer une inversion du sens de rotation; un seul ressort spiral est alors disposé entre le moteur et un arbre ou pignon commun aux deux trains d'engrenages.

Selon une autre possibilité, le moteur peut tourner dans un sens ou dans l'autre, selon le sens du couple de manoeuvre; un seul train d'engrenages réducteur relie le moteur à l'arbre récepteur, par l'intermédiaire d'un seul accouplement à friction. Les moyens d'amortissement angulaire comprennent alors, avantageusement, deux ressorts spiraux enroulés en sens inverse, notamment disposés dans une cavité ménagée dans un pignon du train réducteur.

De préférence, les spires des deux ressorts spiraux, enroulés en sens inverse, possèdent une plus grande capacité de déroulement que d'enroulement, de telle sorte que, lorsque l'un des ressorts est totalement enroulé, l'autre ne soit pas totalement déroulé.

L'invention consiste, mises à part les dispositions exposées ci-dessus, en certaines autres dispositions dont il sera plus explicitement question ci-après à propos de modes de réalisation particuliers décrits avec référence aux dessins ci-annexés, mais qui ne sont nullement limitatifs.

La figure 1, de ces dessins, est une coupe axiale, avec parties arrachées, d'un dispositif d'assistance rotative conforme à l'invention.

La figure 2 est une vue partielle suivant II—II fig. 1.

La figure 3, enfin, montre semblablement à la fig. 1, une autre réalisation possible du dispositif d'assistance rotative.

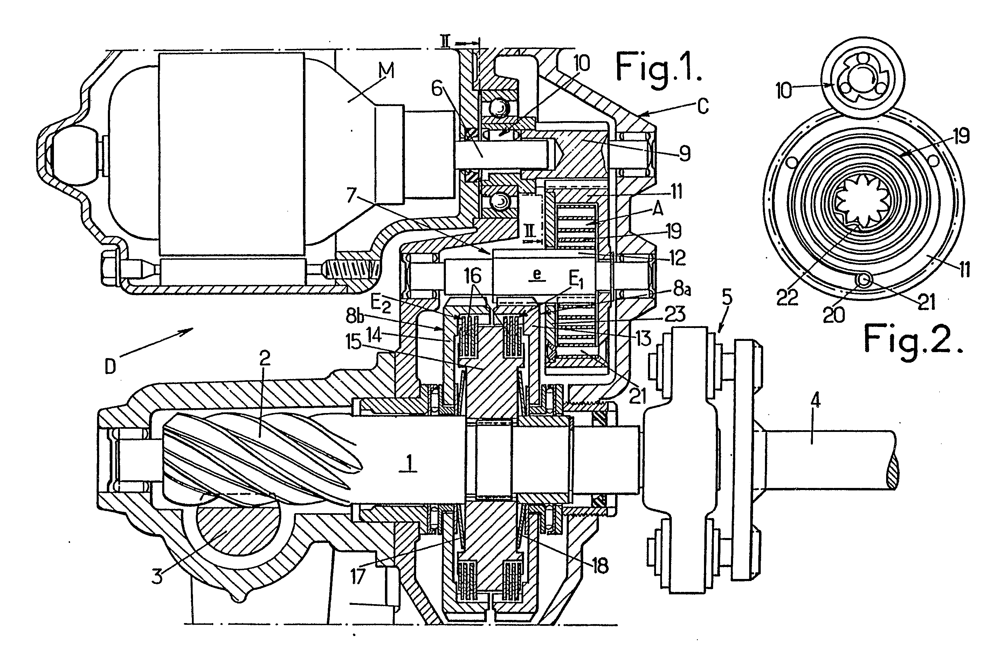

En se reportant aux dessins, notamment à la figure 1, on peut voir un dispositif d'assistance rotative D propre à être accouplé à un organe récepteur 1 susceptible de tourner dans les deux sens. Dans l'exemple représenté sur le dessin, l'organe récepteur 1 est formé par une extrémité d'arbre solidaire d'un pignon 2 d'entraînement d'une crémaillère 3 de direction de véhicule automobile.

Un arbre de manoeuvre 4 est propre à entraîner en rotation, par l'intermédiaire d'un accouplement 5, notamment à manchons élastiques, l'organe récepteur 1. L'arbre de manoeuvre 4 est lui-même commandé par un volant (non représenté).

Le dispositif d'assistance D comprend un moteur électrique M dont l'arbre 6 et le rotor sont susceptibles de tourner à une vitesse relativement élevée par rapport à celle de l'arbre de manoeuvre 4 et de l'organe récepteur 1. L'arbre 6 du .moteur M est disposé parallèlement à l'axe de l'organe récepteur 1.

Des moyens de démultiplication 7 de la vitesse du moteur M, formés par un ou plusieurs trains d'engrenages réducteurs, sont prévus pour assurer l'entraînement en rotation, à une vitesse plus faible, de l'organe récepteur 1.

Des moyens d'accouplement à friction E1, E2 sont disposés à la sortie des moyens de démultiplication 7 pour assurer l'entraînement de l'organe récepteur 1.

Le moteur électrique M est destiné à tourner dans un seul sens de rotation dans l'exemple de la figure 1, et les moyens de démultiplication 7 comprennent deux trains d'engrenages 8a, 8b, associés, respectivement, aux deux accouplements à friction E1, E2 et aux deux sens de rotation possibles de l'organe récepteur 1.

Les deux trains d'engrenages 8a, 8b, possèdent, en commun, un pignon 9, coaxial à l'arbre d'entrée 6, et monté en bout de cet arbre; ce pignon 9 est entraîné en rotation par l'arbre 6, par l'intermédiaire d'une roue libre 10; ainsi, pour le cas où le pignon 9 deviendrait menant, l'arbre 6 et le rotor du moteur M ne seraient pas entraînés en rotation du fait de la présence de cette roue libre.

Les deux trains 8a, 8b possèdent également en commun un pignon 1, de plus fort diamètre, engrenant avec le pignon 9, et un pignon 12, coaxial au pignon 11, mais de plus faible diamètre.

Le train d'engrenages 8a comporte une couronne dentée 13, coaxiale à l'organe récepteur 1, et formant une partie de l'embrayage E1; cette couronne dentée 13 engrène directement avec le pignon 12.

Le train réducteur 8b comporte une couronne dentée 14, semblable à la couronne 13, appartenant à l'embrayage E2, et coaxiale à l'organe récepteur 1; cette couronne 14 coopère avec un pignon supplémentaire (non représenté) de renvoi, lui-même entraîné par le pignon 12; ainsi, la couronne 14 est entraînée en rotation en sens inverse de la couronne 13.

La mise en action de l'embrayage E1 ou E2 est commandée, selon le sens de rotation de l'arbre de manoeuvre 4, de telle sorte que l'assistance soit exercée dans le même sens que la commande assurée par l'arbre 4.

La mise en action des embrayages E1 ou E2 s'effectue à partir d'une valeur de seuil du couple exercé sur l'arbre de commande 4; diverses solutions sont possibles pour commander cette mise en action des embrayages. Par exemple, on peut détecter l'écart angulaire, au niveau de l'accouplement 5, entre l'arbre de commande 4 et l'organe récepteur 1 ou prévoir un capteur de couple monté sur l'arbre 4.

Dans la solution représentée sur la figure 1 l'organe récepteur 1 est monté avec une possibilité de coulissement suivant son axe; le pignon 2 comporte des dents inclinées de manière telle que la coopération du pignon avec la crémaillère engendre une composante axiale sur l'organe récepteur 1, composante ayant tendance à faire coulisser axialement l'organe récepteur 1.

L'organe récepteur 1 est lié en translation et en rotation à un plateau 15 constituant l'organe mené pour les deux embrayages E1, E2, alors que les couronnes 13 et 14 constituent, respectivement, les organes menants de ces embrayages E1, E2. Des disques de friction 16 sont prévus entre le plateau 15 et les couronnes 13 et 14.

L'organe récepteur 1 et le plateau 15 sont maintenus dans leur position médiane par des moyens élastiques de rappel formés, notamment, par des rondelles élastiques déformables 17, 18. Pour cette position médiane du plateau 15, les disques de friction 16 ne sont pas serrés axialement et aucun des deux embrayages E1, E2 n'est en action.

Losqu'un couple de manoeuvre est exercé sur l'arbre 4, la composante axiale qui se produit au niveau du pignon 2 provoque un déplacement de l'organe récepteur 1 et du plateau 15 à l'encontre des moyens élastiques 17 ou 18, selon le sens de rotation.

Les disques de friction 16, de l'embrayage E1 ou E2 correspondant, sont alors serrés entre le plateau 15 et la couronne correspondante 13 ou 14 et l'assistance, assurée par le moteur M, intervient.

Le dispositif d'assistance D comprend, en outre, des moyens d'amortissement angulaire A du couple disposés entre le moteur M et les accouplements à friction E1, E2.

Ces moyens d'amortissement angulaire A sont avantageusement constitués par un accouplement élastique de grande flexibilité formé par au moins un ressort spiral 19.

Dans le mode de réalisation de la figure 1, où le moteur M tourne dans un seul sens, un seul ressort spiral 19 est prévu et disposé entre le moteur M et l'inverseur de sens de rotation formé par la couronne 13 et la couronne 14 associée au pignon de renvoi (non visible).

Advantageusement, le ressort spiral 19 est logé à l'intérieur d'une cavité prévue dans le pignon 11, de grand diamètre, commun aux deux trains d'engrenage 8a, 8b.

Comme visible sur la figure 1, l'extrémité extérieure 20, du ressort spiral 19, est solidaire du pignon 11, par exemple en étant ancrée sur un pion 21 lié rigidement à ce pignon. L'extrémité intérieure 22 du ressort 19 est solidaire en rotation de l'arbre e portant le pignon 11; cet arbre a est muni extérieurement de dents formant le pignon 12 (dont il a été question précédemment), ce pignon 12 se prolongeant à l'intérieur du pignon 11 comme visible sur la figure 1. Les parties des dents du pignon 12, situées à l'intérieur du pignon 11, sont utilisées pour l'accrochage de l'extrémité intérieure 22 du ressort 19, comme visible sur la figure 2; cette extrémité 22 est conformée selon un profil ondulé approprié pour coopérer avec plusieurs dents du pignon 12.

Comme visible sur la figure 1, la cavité prévue à l'intérieur du pignon 11 est fermée, d'un côté (côté droit sur la figure 1) par une paroi faisant partie intégrante du pignon 11 et, de l'autre côté, par une paroi démontable 23.

L'ensemble des moyens de démultiplication 7 et des embrayages à frictions E1, E2, est disposé à l'intérieur d'un carter C.

Le fonctionnement du dispositif d'assistance de l'invention résulte immédiatement des explications précédentes.

Dès l'entrée en action du dispositif d'assistance, par engagement de l'embrayage E1 ou E2, le ressort spiral 19 s'enroule (le pignon 11 tourne par rapport au pignon 12), transmettant un couple croissant, du pignon 11 vers le pignon 12, jusqu'à devenir maximal lorsque l'enroulement du ressort est total. La durée d'enroulage, qui dépend de la vitesse angulaire du pignon 11 ainsi que du nombre de spires du ressort 19 et de leur écartement, est déterminée pour assurer une mise en action rapide, sans toutefois provoquer d'à-coup.

Il en résulte un fonctionnement doux et silencieux et une amélioration de la tenue mécanique des pièces du dispositif.

Il est à noter que le moteur M peut tourner soit en permanence, soit seulement lorsque, en réponse à un couple de manoeuvre exercé sur l'arbre 4 supérieur à un seuil donné, un capteur commande la mise en marche de ce moteur M.

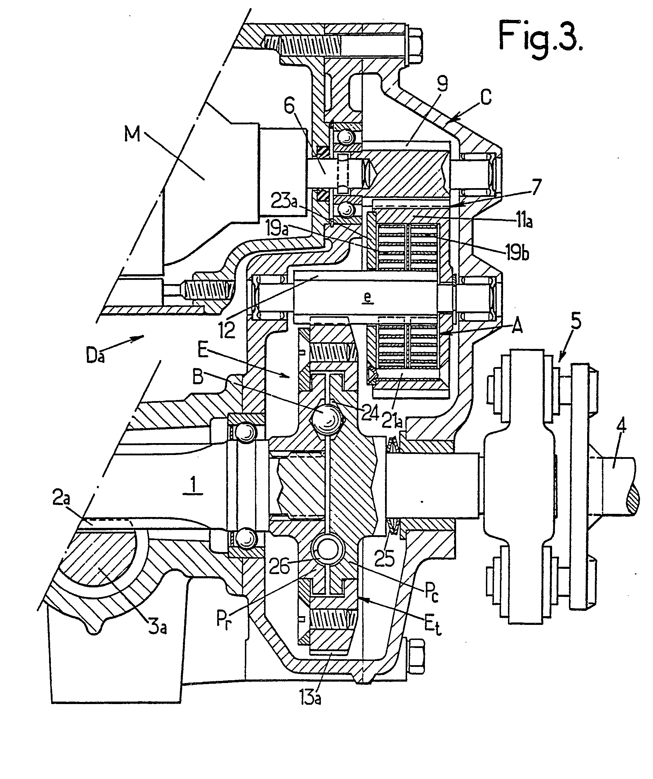

En se reportant à la figure 3, on peut voir une variante de réalisation correspondant au cas où le moteur M est agencé et est commandé de manière à pouvoir tourner dans un sens ou dans l'autre.

Les éléments identiques ou jouant des rôles semblables à des éléments déjà décrits avec référence aux fig. 1 et 2 sont désignés par les mêmes références, éventuellement suivies de la lettre *a*, sans que leur description soit reprise en détail.

Un seul embrayage E est prévu, cet embrayage travaillant dans les deux sens. Cet embrayage peut comprendre deux plateaux $P_r$ et $P_c$ dans lesquels sont prévus des embrèvements 24 servant de logement à des billes B, les fonds des embrèvements ayant une forme conique. Une rotation relative d'un plateau par rapport à l'autre provoque un roulement des billes contre les fonds des embrèvements et un écartement axial de ces plateaux à l'encontre de moyens de rappel élastiques formés, par exemple, par des rondelles déformables 25 agissant par poussée axiale. Des ressorts de rappel angulaire 26 peuvent, en outre, être prévus et logés dans des évidements ménagés dans les faces en regard des plateaux $P_c$ et $P_r$, ces ressorts 26 travaillant en compression. Les bords extérieurs des plateaux $P_c$ et $P_r$ viennent s'appuyer contre les rebords d'un élément tournant $E_t$, formant boîtier et muni, à sa périphérie, de dents constituant la couronne dentée 13*a* qui coopère avec le pignon 12. Un embrayage de ce type, pour un dispositif d'assistance rotative, a déjà été décrit dans la demande de brevet FR N° 78 32 839 déposé le 21 novembre 1978 et publiée sous le n° 2 442 476. Il suffit de se reporter à cette demande de brevet pour avoir plus de détails sur un tel embrayage.

Dans la réalisation de la figure 3, le pignon 9 est directement entraîné en rotation par l'arbre 6; la roue libre 10 de la figure 1 a été supprimée.

La commande de la rotation du moteur M dans un sens ou dans l'autre est assurée par des moyens de contact électrique (non représentés) sensibles au sens de rotation de l'arbre de manoeuvre 4. De tels moyens de contact sont connus et ont été décrits, notamment dans la demande de brevet FR n° 78 32 839 (N° de publication n° 2 442 476) déjà citée.

Les moyens de démultiplication 7 de la vitesse du moteur M comprennent un seul train d'engrenages formé par les pignons 9, 11*a*, 12 et la seule couronne dentée 13*a*.

Les moyens d'amortissement angulaire A comprennent deux ressorts spiraux 19*a*, 19*b* enroulés en sens inverse et disposés dans une cavité ménagée à l'intérieur du pignon 11*a*; la longueur axiale de ce pignon est suffisante pour permettre de loger les deux ressorts spiraux 19*a*, 19*b*.

L'accrochage de l'extrémité extérieure et de l'extrémité intérieure de chaque ressort spiral sur le pignon 11*a* et sur l'arbre de ce pignon muni de dents formant le pignon 12, est réalisé dans les mêmes conditions que celles décrites avec référence aux figures 1 et 2.

Les spires de chaque ressort 19*a*, 19*b*, possèdent une plus grande capacité de déroulement que d'enroulement de telle sorte que l'un des ressorts est totalement enroulé avant que l'autre ressort ne soit totalement déroulé.

Le fonctionnement du dispositif d'assistance $D_a$ de la figure 3 est semblable à celui du dispositif de la figure 1.

Selon le sens de rotation du moteur M, l'un des ressorts spiraux, 19*a* par exemple, s'enroule pendant que l'autre ressort 19*b* se déroule. Le ressort spiral qui s'enroule transmet un couple croissant jusqu'à devenir maximal lorsque l'enroulement est total, assurant alors un entraînement positif. L'autre ressort n'est pas totalement déroulé puisque l'on a prévu une plus grande capacité de déroulement que d'enroulement.

Cette plus grande capacité de déroulement est avantageuse du fait que les ressorts spiraux résistent mieux à une contrainte de traction produite lors d'un enroulement, qu'à une contrainte de compression, produite lors d'un déroulement.

En position de repos, les spires des ressorts 19*a*, 19*b* sont espacées de telle manière que chacun d'eux puisse s'enrouler pendant que l'autre se déroule et inversement.

Dans l'exemple de réalisation de la figure 3, les deux ressorts inversés 19*a*, 19*b* sont logés dans le même pignon 11*a*; il est clair, cependant, que ces ressorts pourraient être placés à des endroits différents.

**Revendications**

1. Dispositif d'assistance rotative propre à être accouplé à un organe récepteur (1) susceptible de tourner dans les deux sens en réponse à la rotation d'un arbre de manoeuvre (4), ce dispositif comprenant un moteur (M) susceptible de tourner à une vitesse relativement élevée par rapport à celle de l'arbre de manoeuvre et de l'organe récepteur, des moyens de démultiplication (7) de la vitesse du moteur comprenant un pignon entraîné par le moteur, et des moyens d'accouplement à friction (E1, E2) propres à assurer l'entraînement de l'arbre récepteur (1) par les moyens de démultiplication et le moteur, caractérisé par le fait qu'il comprend des moyens d'amortissement angulaire (A) du couple, constitués par un accouplement de grande flexibilité, disposés à l'intérieur du pignon (11; 11*a*) entre le moteur (M) et l'accouplement à friction (E1, E2, E).

2. Dispositif selon la revendication 1, caractérisé par le fait que l'accouplement élastique de grande flexibilité est constitué par au moins un ressort spiral (19; 19a, 19b).

3. Dispositif selon la revendication 1 ou 2, caractérisé par le fait que le pignon appartient à un train d'engrenages réducteur servant de moyens de démultiplication.

4. Dispositif selon l'une quelconque des revendications précédentes, dans lequel le moteur (M) est propre à tourner dans un seul sens, les moyens de démultiplication (7) comprenant deux trains d'engrenages (8a, 8b) associés à deux accouplements à friction (E1, E2) correspondant aux deux sens de rotation, un (8b) de ces trains d'engrenages comprenant un renvoi de plus que l'autre pour assurer une inversion du sens de rotation, caractérisé par le fait que les moyens d'amortissement angulaire (A) sont constitués par un seul ressort spiral (19) disposé entre le moteur (M) et un arbre (e) ou pignon (12) commun aux deux trains d'engrenages (8a, 8b).

5. Dispositif selon l'une quelconque des revendications 1 à 3 dans lequel le moteur (M) est propre à tourner dans un sens ou dans l'autre, selon le sens du couple de manoeuvre, un seul train d'engrenages réducteur reliant le moteur à l'arbre récepteur, par l'intermédiaire d'un seul accouplement à friction, caractérisé par le fait que les moyens d'amortissement angulaire (A) comprennent deux ressorts spiraux (19a, 19b), enroulés en sens inverse, disposés dans une cavité ménagée dans un pignon (11a) du train réducteur.

6. Dispositif selon la revendication 5, caractérisé par le fait que les spires des deux ressorts spiraux (19a, 19b), enroulés en sens inverse, possèdent une plus grande capacité de déroulement que d'enroulement, de telle sorte que, lorsque l'un des ressorts est totalement enroulé, l'autre ne soit pas totalement déroulé.

**Patentansprüche**

1. Drehbewegungs-Servoeinrichtung, die mit einem Aufnehmerorgan (1) kuppelbar ist, das in Abhängigkeit von der Drehung einer Betätigungswelle (4) in zwei Drehrichtungen drehbar ist,

mit einem Motor (M), der sich mit einer im Vergleich zur Drehgeschwindigkeit der Betätigungswelle und des Aufnehmerorgans relativ hohen Geschwindigkeit zu drehen vermag,

mit Untersetzungsmitteln (7) zur Herabsetzung der Motordrehzahl, die ein von dem Motor angetriebenes Ritzel beinhalten,

sowie mit Reibungskupplungsmitteln (E1, E2), mittels derer das Aufnehmerorgan (1) durch die Untersetzungsmittel (7) und dem Motor antreibbar ist, dadurch gekennzeichnet, daß Mittel zur Winkeldämpfung des Moments (A) vorgesehen sind, die von einer im Innern des Ritzels (11; 11a) zwischen dem Motor (M) und der Reibungskupplung (E1, E2, E) angeordneten Kupplung großer Flexibilität gebildet sind.

2. Einrichtung nach Anspruch 1, dadurch gekennzeichnet, daß die elastische Kupplung hoher Flexibilität von wenigsten einer Spiralfeder (19; 19a; 19b) gebildet ist.

3. Einrichtung nach Anspruch 1 oder 2, dadurch gekennzeichnet, daß das Ritzel einer Untersetzung-Zahnradgetriebekette angehört, die die Untersetzungsmittel zur Herabsetzung der Motorgeschwindigkeit bildet.

4. Einrichtung nach einem der vorhergehenden Ansprüche, bei der der Motor (M) in nur einer Richtung dreht,

und bei der die Untersetzungsmittel (7) zur Herabsetzung der Motorgeschwindigkeit zwei Zahnradgetriebeketten (8a, 8b) umfassen, die zwei den beiden Drehrichtungen entsprechenden Reibungskupplungen (E1, E2) zugeordnet sind, wobei eine (8b) dieser Getriebeketten zur Erzielung einer Drehrichtungsumkehr ein Vorgelege mehr umfaßt als die andere Getriebekette (8a), dadurch gekennzeichnet, daß die Mittel zur Winkeldämpfung des Moments (A) von einer einzigen Spiralfeder (19) gebildet sind, die zwischen dem Motor und einer Welle (e) oder einem Ritzel (12) angeordnet ist, die bzw. das beiden Zahnradgetriebeketten (8a, 8b) gemeinsam angehört.

5. Einrichtung nach einem der Ansprüche 1 bis 3, bei der der Motor (M) je nach der Drehrichtung des Betätigungsmoments in der einen oder in der anderen Richtung drehbar ist, une bei der eine einzige Untersetzungs-Zahnradgetriebekette der Motor über eine einzige Reigungskupplung mit der Aufnehmerwelle verbindet, dadurch gekennzeichnet, daß die Mittel zur Dämpfung des Drehmoments (A) zwei Spiralfedern (19a, 19b) umfassen, die mit entgegengesetztem Richtungssinn gewickelt und in einem Hohlraum angeordnet sind, der in einem Ritzel (11a) der Untersetzungs-Zahnradgetriebekette gebildet ist.

6. Einrichtung nach Anspruch 5 dadurch gekennzeichnet, daß die Abwickelkapazität der Windungen der beiden mit entgegengesetztem Richtungssinn gewickelten Spiralfedern (19a, 19b) größer ist als ihre Aufwickelkapazität, derart daß die eine Feder nicht vollständig abgewickelt ist, wenn die andere vollständig aufgewickelt ist.

**Claims**

1. A rotary assistance device suitable for coupling to a driven member (1) which is adapted to rotate in both directions in response to the rotation of a drive shaft (4), comprising a motor rotatable at a relatively high speed as compared with the speed of the drive shaft and the driven member, speed reducing means (7) for reducing the speed of the motor comprising a pinion driven by the motor and friction coupling means (E1, E2) suitable for driving the driven shaft (1) by the speed reducing means and the motor, characterized in that it comprises angular torque damping means (A), consisting of a high flexibility coupling, located within the pinion (11; 11a) between the motor (M) and the friction coupling (E1, E2, E).

2. Device according to claim 1, characterized in that the resilient coupling of high flexibility is formed by at least one spiral spring (19; 19a, 19b).

3. Device according to claim 1 or 2, characterized in that the pinion is included in a speed reducing gear train which operates as speed reducing means.

4. Device according to any one of the preceding claims, wherein the motor (M) is adapted for rotation in one direction only, the speed reducing means (7) comprising two gear trains (8a, 8b) associated with two friction couplings (E1, E2) corresponding to the two directions of rotation, one of the gear trains comprising a gear not present in the other for insuring reversal of the direction of rotation, characterized in that the angular damping means (A) are formed by a single spiral spring (19) disposed between the motor (M) and a shaft (e) or pinion (12) common to both gear trains (8a, 8b).

5. Device according to any one of claims 1—3, wherein the motor (M) is adapted to run in one direction or the other, depending on the direction of the drive torque, a single reduction gear train connecting the motor to the driven shaft through a single friction coupling, characterized in that the angular damping means (A) comprise two spiral springs (19a, 19b) wound in opposite directions, disposed in a cavity provided in a pinion (11a) of the reduction train.

6. Device according to claim 5, characterized in that the turns of both spiral springs (19a, 19b), wound in opposite directions, have a greater unwinding than winding-up capacity so that, when one of the springs is completely wound up, the other is not completely unwound.

Fig.1.

Fig.2.

# Fig.3.